# EUROPÄISCHE PATENTSCHRIFT

(11) **EP 3 245 043 B1**
(45) Veröffentlichungstag und Bekanntmachung des Hinweises auf die Patenterteilung: **10.06.2020**
(21) Anmeldenummer: 16700695.6
(22) Anmeldetag: 12.01.2016
(51) Int. Cl.: B29C 67/00, B22F 3/105, B23K 26/03, B33Y 30/00, B33Y 50/02, B23K 26/70

(54) **VORRICHTUNG ZUR GENERATIVEN HERSTELLUNG DREIDIMENSIONALER BAUTEILE**
DEVICE FOR THE ADDITIVE PRODUCTION OF THREE-DIMENSIONAL COMPONENTS
DISPOSITIF DE FABRICATION GÉNÉRATIVE DE PIÈCES TRIDIMENSIONNELLES

(30) Priorität: 14.01.2015 DE 102015000102
(43) Veröffentlichungstag der Anmeldung: 22.11.2017
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); BAKKES, Tobias, 96253 Untersiemau (DE); ZEULNER, Fabian, 96215 Lichtenfels (DE)
(74) Vertreter: Hafner & Kohl PartmbB
(86) Internationale Anmeldenummer: PCT/EP2016/050470
(87) Internationale Veröffentlichungsnummer: WO 2016/113253

(56) Entgegenhaltungen:
- DE-A1-102013 201 629
- DE-U1-202010 010 771
- US-A1- 2005 045 090
- US-A1- 2010 134 628

## Beschreibung

Die Erfindung betrifft eine Vorrichtung zur generativen Herstellung dreidimensionaler Bauteile, nämlich eine Lasersintervorrichtung oder Laserschmelzvorrichtung, mit den weiteren Merkmalen des Patentanspruches 1.

Bei derartigen Vorrichtungen wird ein Bauteil durch aufeinanderfolgendes Verfestigen einzelner Schichten aus Baumaterial, insbesondere Pulvermaterial durch Einwirkung einer Strahlung durch An- oder Aufschmelzen des Baumaterials hergestellt. Der durch einen punkt- oder linienförmigen Energieeintrag erzeugte Schmelzbereich wird durch eine Sensorvorrichtung hinsichtlich seiner Abmessung, Form oder Temperatur erfasst. Daraus werden Sensorwerte zur Evaluierung einer Bauteilqualität hergeleitet. Die durch den Schmelzbereich erzeugte, zur Generierung der Sensorwerte verwendete Strahlung durchsetzt den zum Schmelzeenergieeintrag eingesetzten Scanner. Eine derartige Vorrichtung ist z.B. aus DE 20 2010 010 771 U1 bekannt.

Alternativ kann eine Fokusänderung des Schmelzestrahls aber auch durch eine Änderung der Entfernung zwischen Bauebene und Scanneroptik, nämlich durch Absenken und Anheben der Bauplattform vorgenommen werden.

Der Erfindung liegt die Aufgabe zugrunde, eine Vorrichtung mit den Merkmalen des Oberbegriffs des Anspruches 1 derart auszubilden, dass im Falle einer Variation des Laserfokus und der damit einhergehenden Laserbrennfleckvariation eine optimierte Durchführung der Prozessüberwachung sichergestellt werden kann. Diese Aufgabe wird durch die kennzeichnenden Merkmale des Anspruches 1 gelöst, vorteilhafte Weiterbildungen ergeben sich aus den Unteransprüchen.

Die Vorrichtung nach der Erfindung umfasst zunächst eine Einrichtung, die eine Fokusverschiebung und somit auch eine Spotgrößenvariation möglich macht. Dies kann einerseits durch eine so genannte 3D-Scanoptik geschehen, mit der eine Fokusverstellung, d.h. eine Spotgrößenänderung des Laserbrennflecks auf der zu verschmelzenden Oberfläche im Prozess möglich ist.

Darüber hinaus ist vorgesehen, zwischen dem Scanner der Vorrichtung und der Sensorvorrichtung des Prozessüberwachungssystems eine optische Fokusnachführvorrichtung anzuordnen, die durch in der Vorrichtung beim Prozessablauf verwendete elektronische Maschinendaten zur Fokusnachführung ansteuerbar ist.

Durch diese Maßnahme erfolgt eine automatische Anpassung des "Sichtfeldes" des Prozessüberwachungssystems an die tatsächlich beim Prozess ablaufenden Gegebenheiten auf der Pulveroberfläche im Bereich des Schmelzflecks. Vergrößert sich der Brennfleck des Schmelzestrahls, dann wird automatisch durch die verwendeten Prozessdaten der Blickwinkel des Prozessüberwachungssystems derart erweitert, dass ein vergrößerter Schmelzefleck vom Prozessüberwachungssystem voll, d.h. auch in seinen Randbereichen erfassbar ist, damit ausreichend genaue Daten für die Prozessüberwachung zur Verfügung stehen. Gleiches gilt im Falle einer Verkleinerung des Schmelzflecks, dann wird die optische, durch elektronische Maschinendaten gesteuerte Fokusnachführvorrichtung dafür sorgen, dass der verkleinerte Schmelzepool genau untersucht werden kann, was ebenfalls zu einer deutlichen Verbesserung des Prozessüberwachungsergebnisses führt.

Eine manuelle Nachführung beispielsweise durch manuelle Verstellung von Objektivlinsensystemen des Prozessüberwachungssystems kann entfallen, der Prozessüberwachungsvorgang wird automatisch jeweils an den Fokus angepasst, mit welchem das Pulver aufgeschmolzen wird.

Die zur Fokusnachführung des Prozessüberwachungssystems verwendeten Maschinendaten können z.B. Scanneransteuerungsdaten der PC-Scanneransteuerungskarte der Vorrichtung sein, die bei Vorliegen eines so genannten 3D-Scanners den Fokus der Scannerlinse steuert. Die Maschinendaten können aber auch Daten sein, die aus den Bauprozessparametern abgeleitet sind oder solche umfassen.

Die Fokusnachführungsoptik weist wenigstens ein motorisch verfahrbares optisches Fokussierungselement, beispielsweise eine Fokussierungslinse auf, das Fokussierungselement kann aber auch als motorisch verfahrbarer Linsensatz ausgebildet werden.

Um in jeden Fall eine Verbesserung der Prozessüberwachung zu gewährleisten, kann es von besonderem Vorteil sein, wenn durch die Fokusnachführoptik des Prozessüberwachungssystems vor der Fokusverstellung des auf die Pulverschicht geleiteten Schmelzestrahls durchgeführt wird. Dies bedeutet, dass die Scannerdaten zuerst eine Fokusverstellung des Prozessüberwachungssystems durchführen und die Fokusverstellung für den Schmelzestrahl, ebenfalls gesteuert durch die Maschinendaten, der Fokusverstellung des Prozessüberwachungssystems zeitlich nachfolgt. Dies kann durch eine einfache Verzögerungsschaltung oder verzögernde Steuerung geschehen, die z.B. eine Fokusverstellung des Schmelzestrahls erst dann vornimmt, wenn das Prozessüberwachungssystem bereits auf dem neuen Fokus eingestellt ist.

Die Sensorvorrichtung kann eine Mehrzahl von photosensitiven Elementen umfassen, die wahlweise oder auch gemeinsam in den Strahl oder einen Teilstrahl des Prozessüberwachungssystems gebracht werden können. Dies kann durch Umlenkspiegel, Strahlteiler oder dergleichen geschehen. Werden Strahlteiler verwendet, dann ist es möglich, mehrere oder alle photosensitiven Elemente der Sensorvorrichtung parallel zu betreiben und gegebenenfalls in unterschiedlichen Spektralbereichen Parallelmessungen vorzunehmen, die in die Prozessüberwachung einfließen können. Denkbare Sensorbereiche sind ein Wellenlängenbereich z.B. von 780 - 950 nm, ein weiterer gegebenenfalls interessierender Wellenlängenbereich kann um 1200 nm gewählt werden.

In jedem Fall muss sichergestellt werden, dass eine Schmelzestrahlfokusverstellung im Bereich der Prozessüberwachung durch die Fokusnachführvorrichtung kompensiert wird.

Die Erfindung ist anhand eines Ausführungsbeispiels in der Zeichnungsfigur näher erläutert. Diese zeigt:
Eine schematische Darstellung der wesentlichen Komponenten einer Vorrichtung zur generativen Herstellung dreidimensionaler Bauteile in einer Form einer Laserschmelzvorrichtung mit einem Prozessüberwachungssystem mit optischer Fokusnachführung.

Die in Zeichnungsfigur 1 dargestellte Vorrichtung 1 dient zur generativen Herstellung dreidimensionaler Bauteile 2, die durch aufeinanderfolgendes Verfestigen einzelner Schichten 3 aus verfestigbarem Baumaterial durch Einwirkung einer Strahlung 4 durch Aufschmelzen des Baumaterials 5 hergestellt werden. Der durch einen punkt- oder linienförmigen Energieeintrag erzeugte Schmelzebereich 6 in der Bauebene 7 wird durch eine Sensorvorrichtung 8 eines Prozessüberwachungssystems hinsichtlich seiner Abmessungsform und/oder hinsichtlich seiner Temperatur erfasst. Daraus werden Sensorwerte zur Evaluierung einer Bauteilqualität hergeleitet, wobei die durch den Schmelzebereich 6 erzeugte, zur Generierung der Sensorwerte verwendete Strahlung 9 den zum Schmelzeenergieeintrag eingesetzten Scanner 10 gleichsam in Rückwärtsrichtung durchsetzt und von diesem auf die Sensorvorrichtung 8 des Prozessüberwachungssystems geleitet wird. Bei Prozessüberwachungssystemen, bei denen die vom Schmelzebereich erzeugte reflektierte Strahlung durch den Scanner in Rückwärtsrichtung auf eine Sensorvorrichtung geleitet wird, spricht man von sogenannten coaxialen Prozessüberwachungssystemen, weil die vom Laser ausgehende Strahlung zum Energieeintrag und die reflektierte Strahlung für das Prozessüberwachungssystem den Scanner coaxial durchsetzen.

Die Sensorvorrichtung 8 kann eine Kamera 15 oder eine Fotodiode 16 oder auch mehrere fotosensitive Elemente umfassen, wobei vorgesehen sein kann, dass die zur Generierung der Sensorwerte verwendete Strahlung 9 einen Strahlteiler 17 durchsetzt, welcher die Strahlung auf z. B. die Kamera oder die Fotodiode oder weitere fotosensitive Elemente verteilt.

Erfindungsgemäß ist zwischen dem Scanner 10 und der Sensorvorrichtung 8 des Prozessüberwachungssystems eine optische Fokusnachführvorrichtung 20 angeordnet, die durch elektronische Maschinendaten 21, 22 zur Fokusnachführung nachsteuerbar ist.

Die Fokusnachführvorrichtung umfasst wenigstens ein motorisch verstellbares optisches Fokussierungselement, z. B. einen motorisch verfahrbaren Linsensatz 23 der zur Durchführung einer Nachfokussierung des zur Generierung der Sensorwerte verwendeten Strahlung 9 dient.

Eine Nachfokussierung erfolgt dann, wenn entweder der zumindest die Strahlungsquelle und den Scanner umfassende Strahlengang der Vorrichtung mit einer optischen Verstellvorrichtung zur Schmelzestrahlfokusverstellung versehen ist, oder eine Fokusverstellung des Schmelzestrahls durch mechanisches Verfahren der Bauebene 7 erfolgt.

Die Maschinendaten können zum einen Scanneransteuerungsdaten aus einer Scanneransteuerungskarte sein oder solche umfassen, wobei derartige Scanneransteuerungsdaten primär einen 3D-Scanner hinsichtlich der Z-Achsenfokussierung beeinflussen.

Die Maschinendaten können aber auch aus Bauprozessparametern abgeleitete Daten sein oder solche umfassen, insbesondere Daten, die zur Höhenverstellung der Bauebene herangezogen werden, weil eine Höhenverstellung der Bauebene ebenfalls zu einer Defokussierung des Schmelzestrahls führt.

Bei den Maschinendaten, die der Fokusnachführvorrichtung 20 zugeführt werden, können zeitlich so gesteuert werden, dass eine Fokusnachführung der zur Generierung der Sensorwerte verwendeten Strahlung 9 durch die Fokusnachführvorrichtung 20 vor einer Z-Achsenverstellung eines 3D-Scanners 10 oder zu einer Höhenverlagerung der Bauebene führt. Dadurch ist sichergestellt, dass bei Einsetzen der Laserstrahlung und damit Erzeugung des Schmelzepools, den es zu überwachen gilt, der zur Generierung der Sensorwerte verwendete Strahl 9 bereit hinsichtlich seines Fokus optimiert ist.

Um die Daten der Sensorvorrichtung 8, d.h. die Kameradaten aus der Kamera 15 und die Sensordaten aus der Fotodiode 16 auswerten zu können, ist eine Prozessoreinheit vorgesehen, in der die Daten verarbeitet, gespeichert und ggf. in ein Format gebracht werden können, das eine Visualisierung der 3D-Daten beispielsweise für ein Reverse Engineering ermöglicht.

### BEZUGSZEICHENLISTE

- 1.: Vorrichtung
- 2: Bauteil
- 3: Schicht
- 4: Strahlung
- 5: Baumaterial
- 6: Schmelzebereich
- 7: Bauebene
- 8: Sensorvorrichtung
- 9: Strahlung
- 10: Scanner
- 15: Kamera
- 16: Fotodiode
- 17: Strahlteiler
- 20: Fokusnachführvorrichtung
- 21: Maschinendaten
- 22: Maschinendaten
- 23: Linsensatz
- 30: z-Scanner

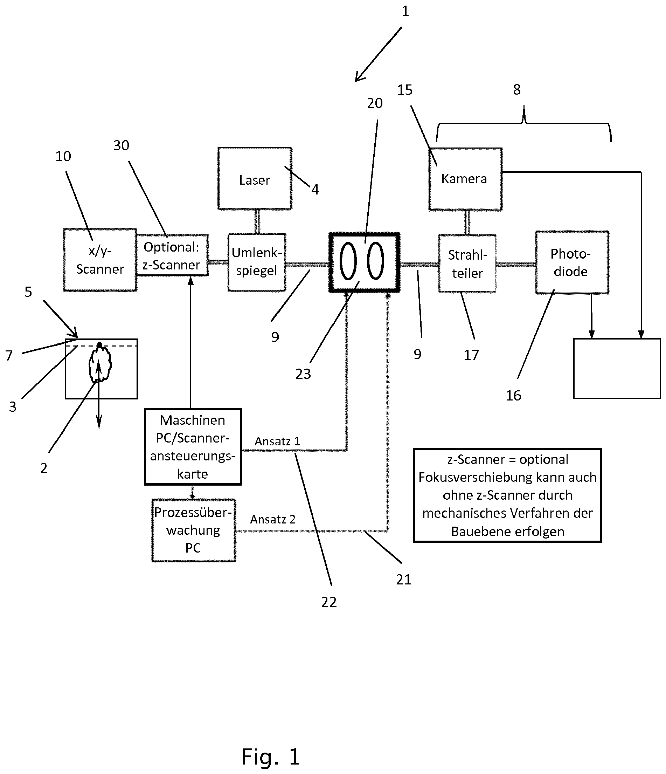

## Patentansprüche

1. Vorrichtung zur generativen Herstellung dreidimensionaler Bauteile (2), nämlich Laserschmelzvorrichtung oder Lasersintervorrichtung, in welcher ein Bauteil (2) durch aufeinanderfolgendes Verfestigen einzelner Schichten (3) aus verfestigbarem Baumaterial durch Einwirkung einer Strahlung (4) durch Aufschmelzen des Baumaterials (5) hergestellt wird, wobei die Vorrichtung einen Scanner (10) und ein Prozessüberwachungssystem mit einer Sensorvorrichtung (8) umfasst, wobei der durch einen punkt- oder linienförmigen Energieeintrag erzeugte Schmelzebereich (6) durch die Sensorvorrichtung (8) des Prozessüberwachungssystems hinsichtlich seiner Abmessungsform und/oder hinsichtlich seiner Temperatur erfassbar ist oder erfasst wird und daraus Sensorwerte zur Evaluierung einer Bauteilqualität herleitbar sind oder hergeleitet werden, wobei die durch den Schmelzebereich (6) erzeugte, zur Generierung der Sensorwerte verwendete Strahlung (9) den zum Schmelzenergieeintrag eingesetzten Scanner (10) durchsetzt und von diesem auf die Sensorvorrichtung (8) des Prozessüberwachungssystems geleitet wird, **dadurch gekennzeichnet, dass** in dem zur Generierung der Sensorwerte verwendeten Strahlengang zwischen dem Scanner (10) und der Sensorvorrichtung (8) des Prozessüberwachungssystems eine optische Fokusnachführvorrichtung (20) angeordnet ist, die durch elektronische Maschinendaten (21, 22) zur Fokusnachführung ansteuerbar ist, wobei die Fokusnachführung der Fokusnachführvorrichtung (20) zur Kompensation der SchmelzestrahlFokusverstellung des den Scanner verlassenden Schmelzestrahls ausgebildet ist.

2. Vorrichtung nach Anspruch 1, **dadurch gekennzeichnet, dass** der zumindest die Strahlungsquelle und den Scanner (10) umfassende Strahlengang der Vorrichtung mit einer optischen Verstellvorrichtung (30) zur Schmelzestrahlfokusverstellung versehen ist.

3. Vorrichtung nach Anspruch 1 oder 2, **dadurch gekennzeichnet, dass** eine Fokusverstellung des Schmelzestrahls (4) durch mechanisches Verfahren der Bauebene (7) erfolgt.

4. Vorrichtung nach einem der vorhergehenden Ansprüche, **dadurch gekennzeichnet, dass** die Maschinendaten (21, 22) Scanneransteuerungsdaten der PC-Scanneransteuerungskarte sind oder solche umfassen.

5. Vorrichtung nach einem der Ansprüche 1 - 3, **dadurch gekennzeichnet, dass** die Maschinendaten (21, 22) aus Bauprozessparametern abgeleitete Daten sind oder solche umfassen.

6. Vorrichtung nach einem der vorhergehenden Ansprüche, **dadurch gekennzeichnet, dass** die Fokusnachführungsoptik wenigstens ein motorisch verfahrbares optisches Fokussierungselement aufweist.

7. Vorrichtung nach einem der vorhergehenden Ansprüche, **dadurch gekennzeichnet, dass** das Fokussierungselement als motorisch verfahrbarer Linsensatz (23) ausgebildet ist.

8. Vorrichtung nach einem der vorhergehenden Ansprüche, **dadurch gekennzeichnet, dass** durch die Fokusnachführungsoptik eine Fokusverstellung des Prozessüberwachungssystems vor der Fokusverstellung des auf die Pulverschicht geleiteten Schmelzestrahls durchführbar ist.

9. Vorrichtung nach einem der vorhergehenden Ansprüche, **dadurch gekennzeichnet, dass** die Sensorvorrichtung (8) eine Mehrzahl von fotosensitiven Elementen (15, 16) umfasst, die wahlweise oder gemeinsam in den Strahl des Prozessüberwachungssystems bringbar sind.

10. Vorrichtung nach einem der vorhergehenden Ansprüche, **dadurch gekennzeichnet, dass** ein Sensor des Prozessüberwachungssystems einen Wellenlängenbereich von 780 - 950 nm ausgelegt ist.

11. Vorrichtung nach einem der vorhergehenden Ansprüche, **dadurch gekennzeichnet, dass** ein Sensor für einen Wellenlängenbereich um 1.200 nm ausgelegt ist.

12. Vorrichtung nach einem der vorhergehenden Ansprüche, **dadurch gekennzeichnet, dass** die von mehreren Sensoren abgeleiteten elektronischen Signale parallel in einem Prozessüberwachungssystems verarbeitet werden.

## Claims

1. Device for generative manufacture of three-dimensional components (2), specifically a laser melting device or laser sintering device, in which a component (2) is manufactured by successive curing of individual layers (3) of curable construction material by means of the action of radiation (4), by melting the construction material (5), wherein the device comprises a scanner (10) and a process monitoring system comprising a sensor device (8), wherein the melting region (6) can be or is detected by the sensor device (8) of the process monitoring system, with respect to the dimensional shape thereof and/or the temperature thereof, and sensor values for evaluating a component quality can be or are derived therefrom, wherein the radiation (9) generated by the melting region (6) and used for generating the sensor values passes through the scanner (10) that is used for melting energy input, and is conducted therefrom to the sensor device (8) of the process monitoring system, **characterised in that** an optical focus tracking device (20) is arranged in the beam path used for generating the sensor values, between the scanner (10) and the sensor device (8) of the process monitoring system, which focus tracking device can be actuated for focus tracking by means of electronic machine data (21, 22), wherein the focus tracking of the focus tracking device (20) is designed for compensating the melting beam focus adjustment of the melting beam leaving the scanner.

2. Device according to claim 1, **characterised in that** the beam path of the device, comprising at least the radiation source and the scanner (10), is provided with an optical adjustment device (30) for melting beam focus adjustment.

3. Device according to either claim 1 or claim 2, **characterised in that** a focus displacement of the melting beam (4) takes place by means of mechanically moving the construction plane (7).

4. Device according to any of the preceding claims, **characterised in that** the machine data (21, 22) are or comprise scanner actuation data of the PC scanner actuation card.

5. Device according to any of claims 1-3, **characterised in that** the machine data (21, 22) are or comprise data derived from construction process parameters.

6. Device according to any of the preceding claims, **characterised in that** the focus tracking optics comprises at least one optical focussing element that can be moved in a motorised manner.

7. Device according to any of the preceding claims, **characterised in that** the focussing element is designed as a lens set (23) that can be moved in a motorised manner.

8. Device according to any of the preceding claims, **characterised in that,** by means of the focus tracking optics, focus adjustment of the process monitoring system can be carried out prior to focus adjustment of the melting beam guided onto the powder layer.

9. Device according to any of the preceding claims, **characterised in that** the sensor device (8) comprises a plurality of photosensitive elements (15, 16) which can be brought, selectively or together, into the beam of the process monitoring system.

10. Device according to any of the preceding claims, **characterised in that** a sensor of the process monitoring system is designed for a wavelength range of 780 - 950 nm.

11. Device according to any of the preceding claims, **characterised in that** a sensor is designed for a wavelength range of approximately 1,200 nm.

12. Device according to any of the preceding claims, **characterised in that** the electronic signals derived from a plurality of sensors are processed in parallel, in a process monitoring system.

## Revendications

1. Dispositif de fabrication générative de composants (2) tridimensionnels, à savoir dispositif de fusion au laser ou dispositif de frittage au laser, dans lequel un composant (2) est fabriqué par solidification consécutive de diverses couches (3) composées d'un matériau de construction pouvant être solidifié par l'action d'un rayonnement (4) en faisant fondre le matériau de construction (5), dans lequel le dispositif comprend un scanner (10) et un système de surveillance de processus avec un dispositif de capteur (8), dans lequel la zone de fusion (6) générée par un apport en énergie ponctuel ou linéaire peut être détectée ou est détectée eu égard à sa forme de dimension et/ou eu égard à sa température par le dispositif de capteur (8) du système de surveillance de processus et des valeurs de capteur peuvent en être déduites ou en sont déduites aux fins de l'évaluation d'une qualité de composant, dans lequel le rayonnement (9) généré par la zone de fusion (6), utilisé pour générer les valeurs de capteur traverse le scanner (10) utilisé pour l'apport en énergie de fusion et est acheminé par celui-ci sur le dispositif de capteur (8) du système de surveillance de processus, **caractérisé en ce qu'**est disposé sur le chemin optique utilisé pour générer les valeurs de capteur, entre le scanner (10) et le dispositif de capteur (8) du système de surveillance de capteur, un dispositif d'ajustement de mise au point (20) optique, qui peut être piloté par des données machine (21, 22) électroniques servant à l'ajustement de mise au point, dans lequel l'ajustement de mise au point du dispositif d'ajustement de mise au point (20) est réalisé pour compenser le réglage de mise au point de rayonnement de fusion du rayonnement de fusion quittant le scanner.

2. Dispositif selon la revendication 1, **caractérisé en ce que** le chemin optique, comprenant au moins la source de rayonnement et le scanner (10), du dispositif est pourvu d'un dispositif de réglage (30) optique servant au réglage de mise au point du rayonnement de fusion.

3. Dispositif selon la revendication 1 ou 2, **caractérisé en ce qu'**un réglage de mise au point du rayonnement de fusion (4) est effectué par un déplacement mécanique du plan de construction (7).

4. Dispositif selon l'une quelconque des revendications précédentes, **caractérisé en ce que** les données machine (21, 22) sont des données de pilotage de scanner de la carte de pilotage de scanner de PC ou comprennent des données de ce type.

5. Dispositif selon l'une quelconque des revendications 1 - 3, **caractérisé en ce que** les données machine (21, 22) sont des données dérivées de paramètres de processus de construction ou comprennent des données de ce type.

6. Dispositif selon l'une quelconque des revendications précédentes, **caractérisé en ce que** l'optique d'ajustement de mise au point présente un élément de focalisation optique pouvant être déplacé de manière motorisée.

7. Dispositif selon l'une quelconque des revendications précédentes, **caractérisé en ce que** l'élément de focalisation est réalisé sous la forme d'un jeu de lentilles (23) pouvant être déplacé de manière motorisée.

8. Dispositif selon l'une quelconque des revendications précédentes, **caractérisé en ce qu'**un réglage de mise au point du système de surveillance de processus peut être mis en œuvre avant le réglage de mise au point du rayonnement de fusion acheminé sur la couche de poudre par l'optique d'ajustement de mise au point.

9. Dispositif selon l'une quelconque des revendications précédentes, **caractérisé en ce que** le dispositif de capteur (8) comprend une multitude d'éléments (15, 16) photosensibles, qui peuvent être amenés de manière sélective ou conjointement dans le rayonnement du système de surveillance de processus.

10. Dispositif selon l'une quelconque des revendications précédentes, **caractérisé en ce qu'**un capteur du système de surveillance de processus est conçu pour une plage de longueurs d'onde de 780 - 950 nm.

11. Dispositif selon l'une quelconque des revendications précédentes, **caractérisé en ce qu'**un capteur est configuré pour une plage de longueurs d'onde autour de 1.200 nm.

12. Dispositif selon l'une quelconque des revendications précédentes, **caractérisé en ce que** les signaux électroniques dérivés des nombreux capteurs sont traités en parallèle dans un système de surveillance de processus.
